# EUROPEAN PATENT APPLICATION

(11) **EP 1 908 356 A1**
(43) Date of publication of application: **09.04.2008**
(21) Application number: 06768114.8
(22) Date of filing: 12.07.2006
(51) Int. Cl.: A23L 1/10

(54) **METHOD OF PRODUCING ROASTED CEREAL EXTRACT AND METHOD OF PRODUCING PROCESSED ROASTED CEREAL PRODUCT**

(30) Priority: 15.07.2005 JP 2005207554
(71) Applicant: Kurarich Co. Ltd., Shibuya-ku Tokyo, 150-0002 (JP)
(72) Inventor: TOYOKURA, Yasuhiro, 1500002 (JP); MATSUMOTO, Tomoyuki, 3998102 (JP)
(74) Representative: Charlton, Peter John
(86) International application number: PCT/JP2006/313850
(87) International publication number: WO 2007/010792

(57) **Abstract**

A method for producing a roasted grain extract with which a sufficient concentration can be obtained is realized.

This production method includes a roasting step (S10) of roasting a grain (unpolished rice 1) while the grain remains in a granular form, an impregnating step (S20) of impregnating the roasted grain with an impregnation liquid LQ1 (water) so that an inside 1b of the grain is swollen and the grain is cracked open, and an extracting step (S30) of extracting a roasted component that is present in the inside of the grain by bringing a solvent LQ2 (water) into contact with the inside of the grain that has been cracked open. In the roasting step, the grain is heated in a state in which the entire inside thereof has absorbed moisture and a carbonized coating 1b is formed on the surface of the grain, after which the inside of the grain is carbonized.

## Description

### Technical Field

The present invention relates to methods for producing roasted grain extracts in which extracts containing roasted components are produced from roasted grain and methods for producing processed roasted grain products obtained by processing roasted grain.

### Background Art

Rice is an indispensable staple food for the Japanese. In particular, unpolished rice is also beneficial as a health food. Thus, food products obtained by processing unpolished rice also have become widely available. Roasted rice is among such food products. Here, roasted rice refers to unpolished rice that has been smothered until it has become black. This roasted rice is also called "kuroyaki (charred rice)", and has also been used as a folk medicine for a long time. Attempts to make this roasted rice into beverages have been made before. For example, a method of grinding roasted rice into very small particles to produce a beverage base and then dissolving this beverage base in hot water has been used. Furthermore, a beverage containing an extract obtained by extracting water-soluble components from germinated unpolished rice by bringing the germinated unpolished rice into contact with extraction water also has been contrived (see Japanese Laid-Open Patent Publication No. 2003-219847, for example).

### Disclosure of Invention

### Problem to be Solved by the Invention

However, the method of dissolving a beverage base in hot water had a problem in that the beverage base was not completely dissolved and the remaining beverage base caused an undesirable cloudiness in the final beverage. Moreover, the method of simply extracting water-soluble components from germinated unpolished rice had a problem in that a beverage with a sufficient concentration could not be obtained. Thus, it was necessary to add a tea leaf extract, for example, to control the taste. In other words, it was not possible to enjoy the flavor of germinated unpolished rice itself.

The present invention was arrived at in light of these issues, and it is an object thereof to realize a method for producing a roasted grain extract with which a sufficient concentration can be obtained and to realize a method for producing a processed roasted grain product suitable for production of the roasted grain extract.

### Means for Solving Problem

A first aspect of the invention for solving the foregoing problems is a method for producing a roasted grain extract, including:
a roasting step of roasting a grain while the grain remains in a granular form;
an impregnating step of impregnating the roasted grain with an impregnation liquid so that an inside of the grain is swollen and the grain is cracked open; and
an extracting step of extracting a roasted component that is present in the inside of the grain by bringing a solvent into contact with the inside of the grain that has been cracked open.

A second aspect of the invention for solving the foregoing problems is a method for producing a roasted grain extract, including:
a roasting step of roasting a grain while the grain remains in a granular form; and
an impregnating and extracting step of impregnating the roasted grain with a solvent so that an inside of the grain is swollen and the grain is cracked open with this swelling, and extracting a roasted component that is present in the inside of the grain by bringing the solvent into contact with the inside of the grain that has been cracked open.

A third aspect of the invention for solving the foregoing problems is a method for producing a roasted grain extract by bringing a solvent into contact with a processed roasted grain product and extracting a roasted component from the processed roasted grain product,
wherein the processed roasted grain product is produced through:
a roasting step of roasting a grain while the grain remains in a granular form;
an impregnating step of impregnating the roasted grain with an impregnation liquid so that an inside of the grain is swollen and the grain is cracked open; and
an impregnation liquid removing step of removing the impregnation liquid held by the grain that has been cracked open.

A fourth aspect of the invention for solving the foregoing problems is a method for producing a processed roasted grain product, including:
a roasting step of roasting a grain while the grain remains in a granular form;
an impregnating step of impregnating the roasted grain with an impregnation liquid so that an inside of the grain is swollen and the grain is cracked open; and
an impregnation liquid removing step of removing the impregnation liquid held by the grain that has been cracked open.
Other features of the present invention will become clear through the present specification and the description of the accompanying drawings.

### Brief Description of Drawings

Fig. 1 is a flowchart illustrating processing of a first embodiment.
Fig. 2A is a cross-sectional view illustrating an internal structure of a roasting apparatus.
Fig. 2B is another cross-sectional view illustrating the internal structure of the roasting apparatus.
Fig. 3A is a diagram illustrating a grain of rice in a state in which a carbonized coating is formed on the surface thereof.
Fig. 3B is a diagram illustrating a grain of rice in a state in which carbonization of the inside of the rice grain is in progress.
Fig. 3C is a diagram illustrating a state in which the entire inside of a grain of rice has been carbonized.
Fig. 3D is a diagram illustrating a grain of rice in a state in which roasting has been ended.
Fig. 4A is a diagram schematically illustrating roasted rice that is spread out in a tray.
Fig. 4B is a diagram schematically illustrating the roasted rice onto which an impregnation liquid is poured.
Fig. 4C is a diagram schematically illustrating a state in which the roasted rice is cracked open by impregnation.
Fig. 5A is a diagram illustrating a state of a grain of roasted rice during impregnation.
Fig. 5B is a diagram illustrating a state in which a grain of roasted rice is slightly opened by impregnation.
Fig. 5C is a diagram illustrating a grain of roasted rice in an advanced stage of opening due to impregnation.
Fig. 5D is a diagram illustrating a grain of roasted rice that has been completely cracked open by impregnation.
Fig. 6A is a diagram illustrating a state in which roasted rice and a solvent are mixed.
Fig. 6B is a diagram illustrating the mixture of the roasted rice and the solvent that is passed through a filter fabric.
Fig. 7 is a graph showing test results of a concentration comparison based on absorbance.
Fig. 8 is a flowchart illustrating processing of a second embodiment.
Fig. 9 is a flowchart illustrating processing of a third embodiment.
Fig. 10A is a diagram schematically illustrating how grain is put in a solvent.
Fig. 10B is a diagram schematically illustrating a state in which the temperature is maintained constant.
Fig. 10C is a diagram schematically illustrating a state in which roasted components have been extracted into the solvent.

### Explanation of Reference Numerals

- 1: rice (roasted rice, unpolished rice)
- 1a: carbonized coating
- 1b: inside of a grain of rice
- 1c: center of a grain of rice
- 10: roasting apparatus
- 11: housing
- 12: roasting pot
- 13: burner
- 14: rotating shaft
- 15: hole
- 21: tray
- 22: plastic wrap
- 31: vessel
- 32: filter fabric
- 33: another vessel
- 41: vessel
- 41': lid
- 42: heater
- 43: thermometer
- LQ1: impregnation liquid
- LQ2: solvent

### Best Mode for Carrying Out the Invention

### === Overview of the Disclosure ===

At least the following matters will be made clear by the present specification and the description of the accompanying drawings.

That is to say, it is possible to realize a method for producing a roasted grain extract, including: a roasting step of roasting a grain while the grain remains in a granular form; an impregnating step of impregnating the roasted grain with an impregnation liquid so that an inside of the grain is swollen and the grain is cracked open; and an extracting step of extracting a roasted component that is present in the inside of the grain by bringing a solvent into contact with the inside of the grain that has been cracked open.
According to this production method, the roasted grain is cracked open through the impregnating step. Moreover, the roasted component in the inside of the grain seems to have become easy to separate as a result of impregnation with the impregnation liquid. Accordingly, a roasted grain extract with a sufficient concentration can be obtained by the extracting step.

In the roasting step of the production method, the grain is heated in a state in which the entire inside of the grain has absorbed moisture and a carbonized coating is formed on a surface of the grain, after which the inside of the grain is carbonized.
According to this production method, it seems that when the inside of the grain is carbonized, evaporation of moisture and supply of oxygen can be suppressed by the carbonized coating on the surface of the grain.
Accordingly, the inside of the grain can be carbonized in such a manner that it is smothered.

In the impregnating step of the production method, the roasted grain is soaked in an amount of the impregnation liquid equivalent to a maximum amount that the roasted grain can be impregnated with.
According to this production method, when the grain is cracked open, the inside of the grain is impregnated with most of the impregnation liquid. That is to say, generation of a drip (outflowing component) can be suppressed. Thus, an extract with a high concentration can be obtained easily in the extracting step.

In the extracting step of the production method, the grain that has been cracked open and the solvent are put in the same vessel and mixed, and after the roasted component is extracted into the solvent, the solvent containing the roasted component is separated from the mixture.
According to this production method, an extract with a high concentration can be obtained easily.

In the production method, an impregnation liquid removing step of removing the impregnation liquid held by the grain that has been cracked open is performed prior to the extracting step.
According to this production method, the impregnation liquid removing step is performed before the extracting step, so that the grain that has been cracked open becomes easy to handle. For example, when the extracting step is performed at a remote place, the grain that has been cracked open can be transported easily.

In the impregnation liquid removing step of the production method, the impregnation liquid held by the grain is removed while the impregnation liquid is frozen.
According to this production method, the impregnation liquid can be selectively removed from the grain, so that the roasted component can be extracted in a high concentration.

In the extracting step of the production method, the grain from which the impregnation liquid has been removed and the solvent are put in a same vessel and mixed, and after the roasted component is extracted into the solvent, the solvent containing the roasted component is separated from a mixture.
According to this production method, an extract with a high concentration can be obtained easily.

In the extracting step of the production method, water is used as the solvent.
According to this production method, an extract that is easy to handle can be obtained.

In the extracting step of the production method, water adjusted to a temperature of 50°C or more and 80°C or less is used as the solvent.
According to this production method, extraction can be performed in a time suitable for mass production without loss of a savory (umami) ingredient contained in the roasted component.

In the extracting step of the production method, a mixture of water and an alcohol is used as the solvent. Moreover, a mixture of water and an alcohol is used as the solvent.
According to this production method, an extract containing an alcohol can be obtained.

Furthermore, it is also possible to realize a method for producing a roasted grain extract, including: a roasting step of roasting a grain while the grain remains in a granular form; and an impregnating and extracting step of impregnating the roasted grain with a solvent so that an inside of the grain is swollen and the grain is cracked open with this swelling, and extracting a roasted component that is present in the inside of the grain by bringing the solvent into contact with the inside of the grain that has been cracked open.
According to this production method, it is possible to extract the roasted component while cracking the grain open, so that an operation such as a transfer of the grain can be omitted.

In the impregnating and extracting step of the production method, water is used as the solvent.
According to this production method, an extract that is easy to handle can be obtained.

In the impregnating and extracting step of the production method, water adjusted to a temperature of 20°C or more and 85°C or less is used as the solvent.
According to this production method, the roasted component can be extracted in a concentration suitable for a beverage.

In the impregnating and extracting step of the production method, water adjusted to a temperature of 40°C or more and 85°C or less is used as the solvent.
According to this production method, extraction can be performed in a time suitable for mass production without loss of a savory (umami) ingredient in the roasted component.

In the impregnating and extracting step of the production method, a mixture of water and an alcohol is used as the solvent. Moreover, an alcohol is used as the solvent.
According to this production method, an extract containing an alcohol can be obtained.

In the roasting step of the production method, unpolished rice is used as the grain.
According to this production method, a beverage of roasted unpolished rice can be produced.

In the roasting step of the production method, either one of barley and wheat is used as the grain.
According to this production method, a beverage of either roasted barley or wheat can be produced.

Furthermore, it is also possible to realize a method for producing a roasted grain extract by bringing a solvent into contact with a processed roasted grain product and extracting a roasted component from the processed roasted grain product, wherein the processed roasted grain product is produced through: a roasting step of roasting a grain while the grain remains in a granular form; an impregnating step of impregnating the roasted grain with an impregnation liquid so that an inside of the grain is swollen and the grain is cracked open; and an impregnation liquid removing step of removing the impregnation liquid held by the grain that has been cracked open.
According to this production method, a roasted grain extract can be produced easily even at a remote place.

Furthermore, it is also possible to realize a method for producing a processed roasted grain product, including: a roasting step of roasting a grain while the grain remains in a granular form; an impregnating step of impregnating the roasted grain with an impregnation liquid so that an inside of the grain is swollen and the grain is cracked open; and an impregnation liquid removing step of removing the impregnation liquid held by the grain that has been cracked open.
According to this production method, a processed roasted grain product that is easy to handle and from which an extract can be produced easily can be obtained.

### === First Embodiment ===

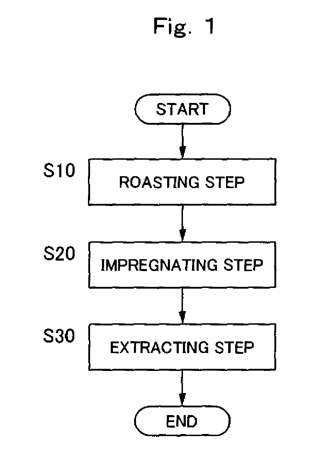

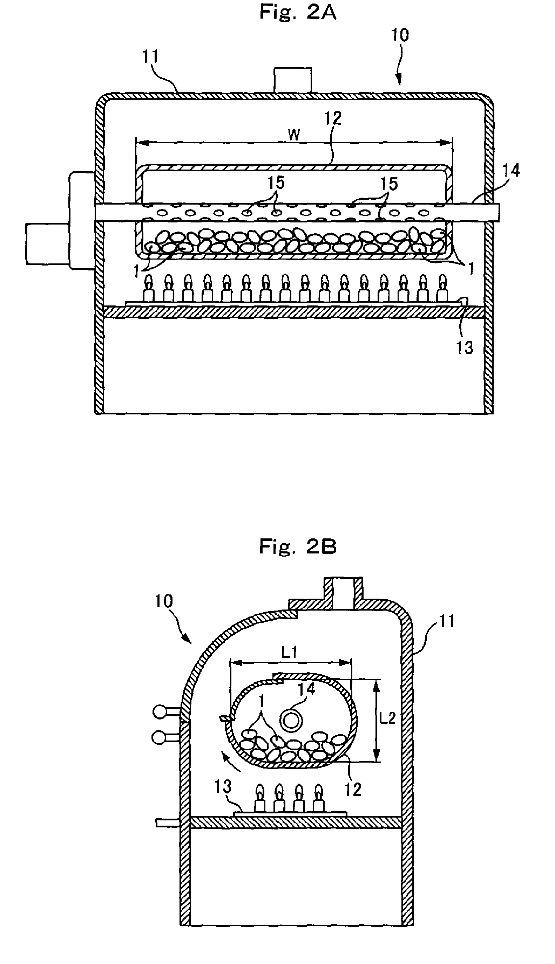

Hereinafter, the method for producing a roasted grain extract will be described in greater detail. First, a first embodiment will be described. Here, Fig. 1 is a flowchart illustrating processing of the first embodiment. As shown in Fig. 1, a production process according to the first embodiment includes a roasting step (S10) of roasting a grain while the grain remains in a granular form, an impregnating step (S20) of impregnating the roasted grain with an impregnation liquid so that the inside of the grain is swollen and the grain is cracked open, and an extracting step (S30) of bringing a solvent into contact with the inside of the grain that has been cracked open, thereby extracting roasted components that are present in the inside. As the grain to be roasted, rice 1 (unpolished rice, see Fig. 2A) is used. In the following, each of the steps will be described in greater detail.

### <Roasting Step (S10)>

First, the roasting step will be described. In this roasting step, the rice 1 is roasted while remaining in its granular form. That is to say, roasting is performed such that bursting of the rice 1 and formation of a cavity within the rice 1 are prevented from occurring. In this embodiment, this roasting step is performed using a roasting apparatus 10. Here, Fig. 2A is a cross-sectional view illustrating an internal structure of the roasting apparatus 10. Fig. 2B is another cross-sectional view illustrating the internal structure of the roasting apparatus 10.

As can be seen from these drawings, the roasting apparatus 10 has a housing 11, a roasting pot 12 that is disposed in the housing 11, and a burner 13 that is disposed in the housing 11 under the roasting pot 12. The roasting pot 12 is made from a cylindrical member that is elliptical in cross section (longitudinal section) when viewed from the side. The side faces of the roasting pot 12 of this embodiment have a major diameter L1 of 0.56 m and a minor diameter L2 of 0.4 m. Moreover, the width W (distance between the two opposing side faces) of the roasting pot 12 is 0.86 m. The roasting pot 12 is made of a metal plate, for example. A rotating shaft 14 in the form of a pipe is attached to the roasting pot 12. The rotating shaft 14 is attached so that it runs along the center of the cylindrical shape of the roasting pot 12. The ends of the rotating shaft 14 protrude outward from the elliptical side faces of the roasting pot 12. Moreover, a plurality of holes 15 are formed in the rotating shaft 14 excluding the two ends, that is, in a portion located within the roasting pot 12, and an internal space of the roasting pot 12 is in communication with a space in the rotating shaft 14 through these holes 15.

In this roasting apparatus 10, the rice 1 put in the roasting pot 12 is roasted by rotating the roasting pot 12 around the rotating shaft 14. At this time, since the roasting pot 12 is elliptical in longitudinal section, the rice 1 that accumulates in a lower part of the roasting pot 12 when the major axis (axis having the length L1) of the ellipse is oriented vertically is raised as the roasting pot 12 rotates. Then, when the accumulation limit is exceeded, the rice 1 falls like an avalanche of snow. At this time, falling grains of the rice 1 fall in such a manner that they roll down over other grains of the rice 1, and thus cracking of the rice 1 can be prevented. As a result, the rice 1 is stirred entirely and heated uniformly while still remaining in its granular form. Moreover, in this roasting apparatus 10, the temperature in the roasting pot 12 can be adjusted by adjusting the heat of the burner 13. For example, the temperature can be increased up to about 220°C - 280°C. Furthermore, since the rotating shaft 14 functions as a chimney hole (a tube from which smoke in a cooking stove escapes), the rice 1 in the roasting pot 12 can be smothered. In the following description, the granular rice that has been roasted is also referred to as the roasted rice 1 for the sake of convenience.

in this roasting step, a water absorption step is performed first to soak the inside of the rice 1 with water sufficiently. The rice is allowed to absorb water before being roasted so that starch that is present within the rice 1 can be gelatinized and then carbonized. In the water absorption step of this embodiment, the rice 1 is soaked in water at normal temperature (around 20°C) for 20 minutes to 30 minutes. Here, the soaking time that is required in the water absorption step varies depending on the temperature of water or the type of the rice 1, for example. However, the soaking time can be determined from the standpoint of whether or not to allow even the core of the rice 1 to absorb water. Accordingly, it is believed that any soaking time equal to or longer than a time during which water is absorbed to saturation is enough.

After the rice 1 is allowed to absorb water, a heating step is performed. In this heating step, by heating the rice 1 that has absorbed water, a carbonized coating is formed on the surface of the rice 1, and thereafter the inside of the rice 1 is carbonized. For this purpose, the temperature in the roasting pot 12 is adjusted appropriately over time. For example, the temperature is increased slowly to approximately 190°C over about one hour. Then, roasting is performed for about 50 minutes while maintaining the temperature at about 195°C to 200°C (continuous roasting temperature). Thereafter, the temperature is increased to about 210°C to 215°C (finishing temperature) and roasting is ended.

Table 1 shows a specific example of roasting conditions. In the specific example, during roasting, the rotation speed of the roasting pot 12 is set to 18 revolutions per minute in a step 1 and set to 36 revolutions per minute in and after a step 2.

**Table 1**

| step | elapsed time (min) | roasting pot temperature (°C) |
|---|---|---|
| 1 | 30 | 135 |
| 2 | 60 | 185 |
| 3 | 70 | 195 |
| 4 | 75 | 197 |
| 5 | 90 | 200 |
| 6 | 105 | 198 |
| 7 | 120 | 203 |
| 8 | 140 | 208 |
| 9 | 150 | 213 |
| 10 | 157 | 213 to 216 |

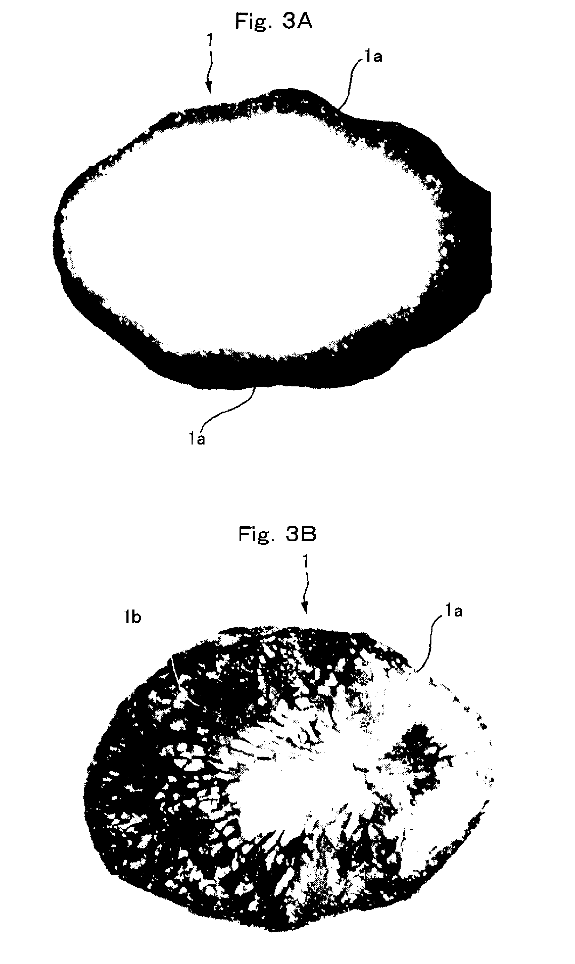

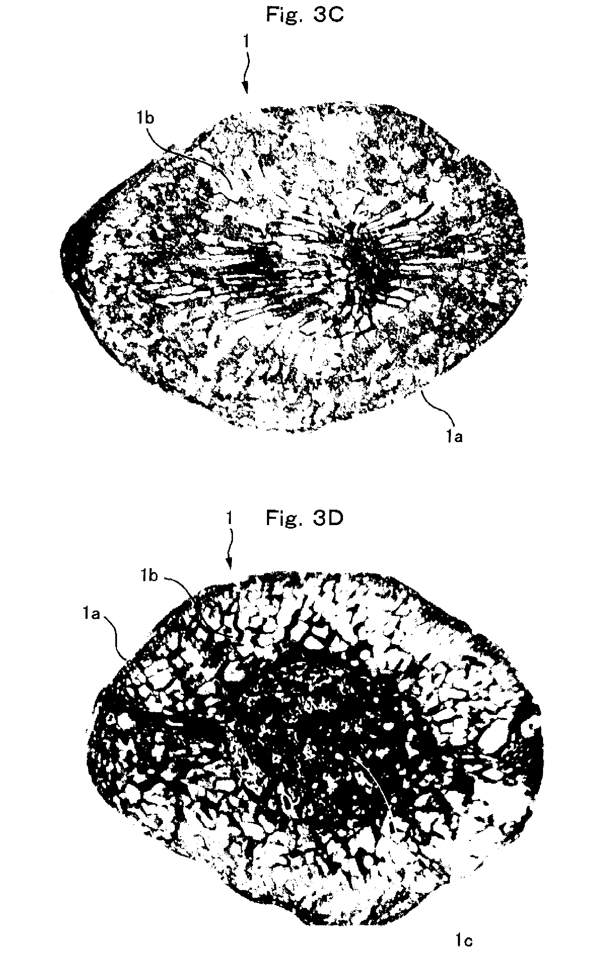

By performing this roasting step, the rice 1 is carbonized (charred) to the core and becomes roasted rice. Here, Fig. 3A is a diagram illustrating a grain of the rice 1 in a state in which the carbonized coating 1a is formed on the surface thereof. Fig. 3B is a diagram illustrating a grain of the rice 1 in a state in which carbonization of the inside 1b of the rice grain is in progress. Fig. 3C is a diagram illustrating a grain of the rice 1 in a state in which the entire inside 1b of the rice grain has been carbonized. Fig. 3D is a diagram illustrating a grain of the rice 1 (i.e., roasted rice 1) in a state in which roasting has ended. These drawings were obtained by observing under a microscope the cross section of the grains of the rice 1 sampled appropriately in the process of roasting. Moreover, in all of these drawings, the magnification is 100 times.

As can be seen from these drawings, by performing roasting under the above-described conditions, the carbonized coating 1a is first formed on the surface of the rice 1 (Fig. 3A), the inside 1b of the rice is then carbonized (Fig. 3B to Fig. 3C), and thereafter, even the center 1c of the rice is carbonized (Fig. 3D). When undergoing such a process, the rice 1 seems to change its state as follows. Since the carbonized coating 1a is formed on the surface, this carbonized coating 1a seems to suppress infiltration of oxygen and moisture into the inside 1b of the rice and release of moisture from the inside 1b of the rice. Accordingly, when the inside 1b of the rice is heated by roasting, the moisture contained in the inside 1b of the rice also is heated. However, the moisture heated is prevented from being released to the outside by the carbonized coating 1a. Thus, while the moisture contained in the inside 1b of the rice is released little by little, a large amount of the moisture remains in the inside 1b of the rice and acts to gelatinize starch. In short, it seems that after the carbonized coating 1a is formed on the surface, the inside 1b of the rice is in a state of being boiled. Thereafter, heating is still continued, so that the moisture in the inside 1b of the rice is released gradually and therefore the inside 1b of the rice is carbonized. That is to say, it seems that the inside 1b of the rice is in a state of being smothered. At this time, the gelatinized starch seems to be carbonized in the inside 1b of the rice. Accordingly, roasted components in the roasted rice 1 seem to contain a large amount of savory (umami) ingredients resulting from the gelatinized starch and minerals.

### <Impregnating step (S20) >

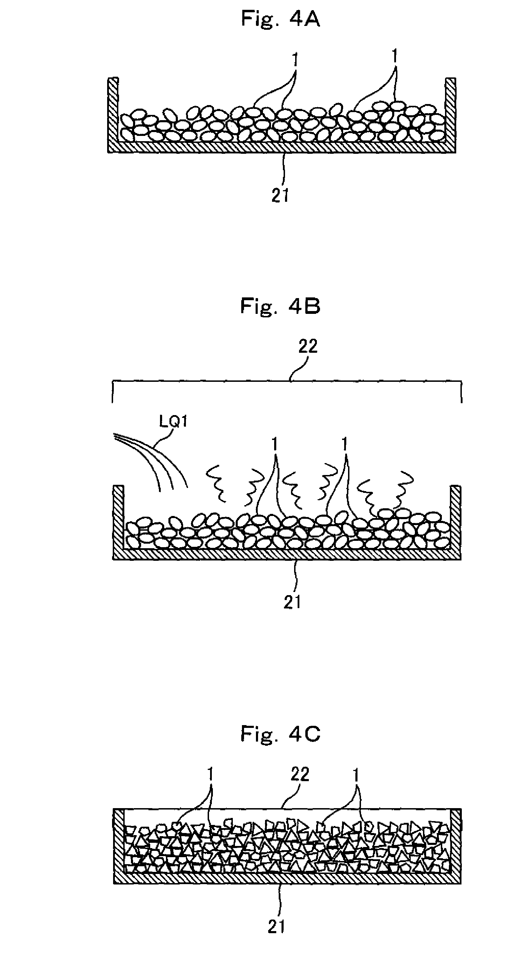

Next, the impregnating step will be described. Here, Fig. 4A to Fig. 4C are diagrams illustrating the impregnating step. Namely, Fig. 4A is a diagram schematically illustrating the roasted rice 1 that is spread out in a tray 21. Fig. 4B is a diagram schematically illustrating the roasted rice 1 onto which an impregnation liquid LQ1 is poured. Fig. 4C is a diagram schematically illustrating a state in which the roasted rice 1 is cracked open by impregnation. In this embodiment, this impregnating step is performed using a shallow vessel such as the tray 21.

In this impregnating step, first, a predetermined amount of the roasted rice 1 is put in the tray 21, and the surface thereof is smoothed to render the thickness uniform (as shown in Fig. 4A). In the experiment, 1 Kg of the roasted rice 1 was used.

After the roasted rice 1 is put in the tray 21, a predetermined amount of the impregnation liquid LQ1 is poured into the tray 21 (as shown in Fig. 4B). In this embodiment, water at normal temperature (about 20°C) is poured in as the impregnation liquid LQ1. At this time, the amount of water that is poured in can be an amount equivalent to the maximum amount that the roasted rice 1 can be impregnated with. This is because most of the water that has been poured in can be absorbed when the roasted rice 1 is sufficiently impregnated with water. In other words, generation of a drip (outflowing component) can be suppressed. As a result, the roasted rice 1 in an impregnated state becomes easy to handle, and thus an extract with a high concentration can be obtained easily in the subsequent extracting step (S30). In this embodiment, it was found that the amount of water that can be absorbed by the roasted rice 1 that has been roasted in the above-described roasting step (S10) is 1.6 times the weight of the roasted rice. Based on this finding, 1.6 L of water, which is equivalent to 1.6 times the weight of the roasted rice 1, is poured in.

After pouring in water, an opening of the tray 21 is covered with a plastic wrap 22 or the like to suppress evaporation of moisture, and the rice is left while being covered with the plastic wrap 22 or the like. Thus, the inside 1b of the rice is impregnated with water. When the rice is left for about 2 hours, grains of the roasted rice 1 begin cracking. At this time, the rice is mixed entirely using a spatula or the like, and then the surface thereof is smoothed uniformly. When about 2 hours has elapsed after this operation (i.e., when about 4 hours has elapsed after pouring in water), the grains of the roasted rice 1 are in a state in which almost all of them are cracked open by impregnation of the inside 1b of the rice with water (as shown in Fig. 4C). When this state is reached, the impregnating step is ended.

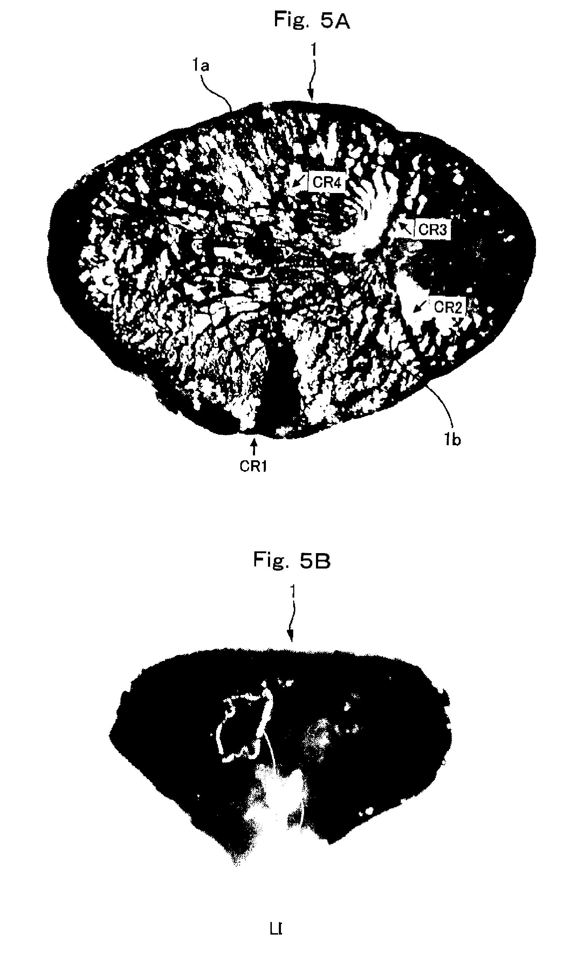

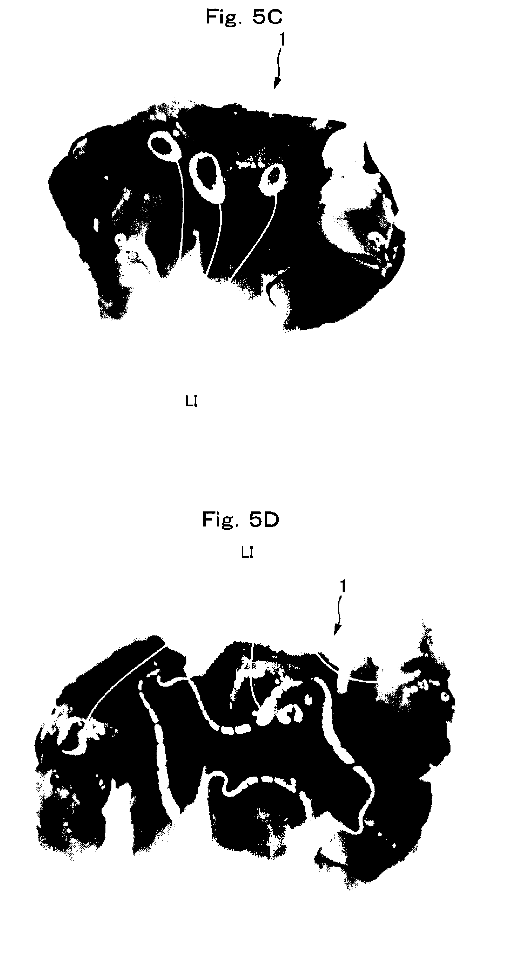

Here, how the roasted rice 1 is cracked open by impregnation with water will be described step by step. Fig. 5A is a diagram illustrating a state of a grain of the roasted rice 1 during impregnation. Fig. 5B is a diagram illustrating a state in which a grain of the roasted rice 1 cracks and is slightly opened by impregnation. Fig. 5C is a diagram illustrating a grain of the roasted rice 1 in an advanced stage of opening due to impregnation. Fig. 5D is a diagram illustrating a grain of the roasted rice 1 that has been completely cracked open by impregnation. In the following description, the state in Fig. 5B is also referred to as a "slightly opened state", the state in Fig. 5C is also referred to as a "moderately opened state", and the state in Fig. 5D is also referred to as a "completely opened state", for the sake of convenience. It should be noted that the magnification of the photograph in Fig. 5A is 100 times, and the magnification of the photograph in Fig. 5B to Fig. 5D is 20 times. Moreover, patterns indicated by the symbol L1 in Fig. 5B to Fig. 5D are caused by ceiling lighting and have nothing to do with the roasted rice 1.

In a state immediately after water is poured in, the water infiltrates into the inside 1b of the rice from, for example, a crack indicated by a symbol CR1 in Fig. 5A, and then infiltrates all the way to the center 1c of the rice through gaps between tissues, which are indicated by symbols CR2 to CR4. As can be seen from Fig. 5A, Fig. 3C, Fig. 3D, and other drawings, tissues in the inside 1b of the rice remain without losing their shape because the roasted rice 1 has been charred. Thus, it seems that the water infiltrates to the center 1c of the rice smoothly by the capillary phenomenon. The tissues in the inside 1b of the rice swell by absorbing the water that has infiltrated. At this time, the carbonized coating 1a hardly absorbs moisture and therefore seems to act to inhibit the tissues in the inside 1b of the rice from swelling. However, since the power of the tissues in the inside 1b of the rice to swell is stronger, the crack in the carbonized coating 1a widens, and the roasted rice 1 enters the slightly opened state. Then, when the tissues in the inside 1b of the rice swell further, cracks widen in several places in the carbonized coating 1a, and the roasted rice 1 enters the moderately opened state (Fig. 5C), and is finally in the completely opened state (Fig. 5D). When the rice is in this completely opened state, the tissues in the inside 1b of the rice have sufficiently absorbed water, and thus it seems that the roasted components adhered to these tissues in the inside 1b of the rice are easy to separate.

In the embodiment described above, tap water at normal temperature was used as the impregnation liquid LQ1. However, it was found that the time required to completely open the roasted rice 1 varies depending on the temperature of the impregnation liquid LQ1. That is to say, it was found that the higher the temperature of the impregnation liquid LQ1, the quicker the roasted rice 1 is opened. This point will be described below. Table 2 shows the results of a measurement in which the time to open the rice was measured for various temperatures of the impregnation liquid LQ1. Also in this measurement, water was used as the impregnation liquid LQ1.

**Table 2**

| sample | temperature of water (°C) | time until start of cracking | time until completely open |
|---|---|---|---|
| 1-1 | 20 (normal temperature) | about 2 hrs | about 4 hrs |
| 1-2 | 70 to 85 | about 15 min | about 1 hr |
| 1-3 | 95 | NG | NG |

From these measurement results, it was found that when water is used as the impregnation liquid LQ1, the temperature of the water can be selected from a range from normal temperature (20°C) to 85°C (samples 1-1 and 1-2). The reason why the roasted rice 1 was not opened at 95°C (sample 1-3) is not clear, but it may be because lipids contained in the carbonized coating 1a on the surface were solidified, for example. Furthermore, as long as the temperature is within the range from normal temperature to 85°C, the higher the temperature, the more the time that is required until the completely opened state is reached can be reduced. Thus, it can be considered preferable to select a high temperature from the standpoint of processing efficiency.

This impregnating step is also intended to render the roasted components easy to extract by swelling the tissues in the inside 1b of the rice sufficiently. Here, if the extraction temperature is changed, the concentration (and therefore the taste) of the extracted liquid may be changed. Thus, it can be considered more preferable to determine the temperature of the impregnation liquid LQ1 used in the impregnating step with consideration given to the taste of a liquid obtained by the extracting step, that is, a solvent (corresponding to the roasted grain extract) containing the roasted components.

### <Extracting Step (S30)>

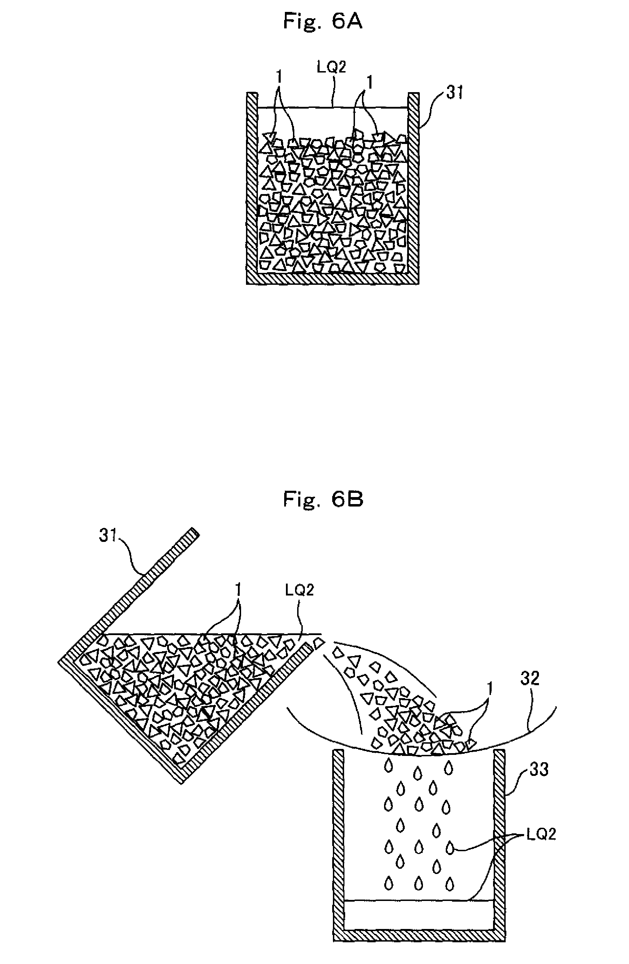

Next, the extracting step will be described. Here, Fig. 6A is a diagram illustrating a state in which the roasted rice 1 that has been cracked open and a solvent LQ2 are put in the same vessel 31 and mixed. Fig. 6B is a diagram schematically illustrating the mixture of the roasted rice 1 and the solvent LQ2 that is passed through a filter fabric 32. In this extracting step, the roasted components contained in the roasted rice 1 that has been cracked open are extracted into the solvent LQ2 to obtain a roasted grain extract. In this embodiment, water adjusted to a predetermined temperature is used as the solvent LQ2. More specifically, one liter (1000 g) of water adjusted to a temperature of about 70°C to 80°C is used with respect to the roasted rice 1 (400 g) that has been cracked open. In this extracting step, the roasted rice 1 that has been cracked open and water (the solvent LQ2) are put in the same vessel 31 and mixed, as shown in Fig. 6A. At this time, the temperature of water decreases, so that the temperature range of 70°C to 80°C is maintained using a heater (not shown), for example. Then, after maintaining this temperature range for about 30 minutes, water containing the roasted components are separated from the mixture of the roasted rice 1 and water into another vessel 33 using the filter fabric 32, as shown in Fig. 6B. In this instance, compression is performed during this separation to squeeze out water containing the roasted components. By using such a method, water (a roasted grain extract) containing the roasted components at high concentrations can be obtained easily. Then, this roasted grain extract is used as an undiluted solution for producing a roasted rice beverage. That is to say, a roasted rice beverage can be obtained by diluting this roasted grain extract to a predetermined concentration. Moreover, this roasted grain extract may be used as a raw material used for cooking.

If the extraction temperature, that is, the temperature of the solvent LQ2 (e.g., water) is changed, then the concentration of the extract may be changed. Therefore, an extraction test was conducted for various temperatures of the solvent LQ2. Table 3 shows the results. In this test, there are differences in the extraction time, and this is because the test time was adjusted as appropriate. That is to say, in cases where a predetermined concentration was obtained, the test was ended after a shorter time. Moreover, water was used as the solvent LQ2.

**Table 3**

| sample | temp. of water (°C) | amount of roasted rice (g) | amount of water (g) | extraction time | concentration |
|---|---|---|---|---|---|
| 2-1 | 72 to 83 | 400 | 1000 | 30 min | OK |
| 2-2 | 59 to 63 | 400 | 1000 | 10 min | OK |
| 2-3 | 51 to 74 | 400 | 500 | 10 min | OK |
| 2-4 | 53 to 55 | 400 | 500 | 10 min | OK |
| 2-5 | 19 to 23 | 400 | 1000 | 2 hrs 30 min | NG |
| 2-6 | 20 to 23 | 400 | 500 | 2 hrs 30 min | NG |

From these test results, it was found that in the extracting step, the temperature of the solvent LQ 2 has a great influence. That is to say, as long as water serving as the solvent LQ2 has a temperature of 53°C or more and 83°C or less (sample 2-1 to sample 2-4), an extract with a desired concentration can be obtained in a time (within 2 hours and 30 minutes) suitable for mass production. Moreover, at normal temperature, a sufficient concentration could not be obtained in the time suitable for mass production.

### <Regarding Comparison of Concentration between Extracts Based on Absorbance>

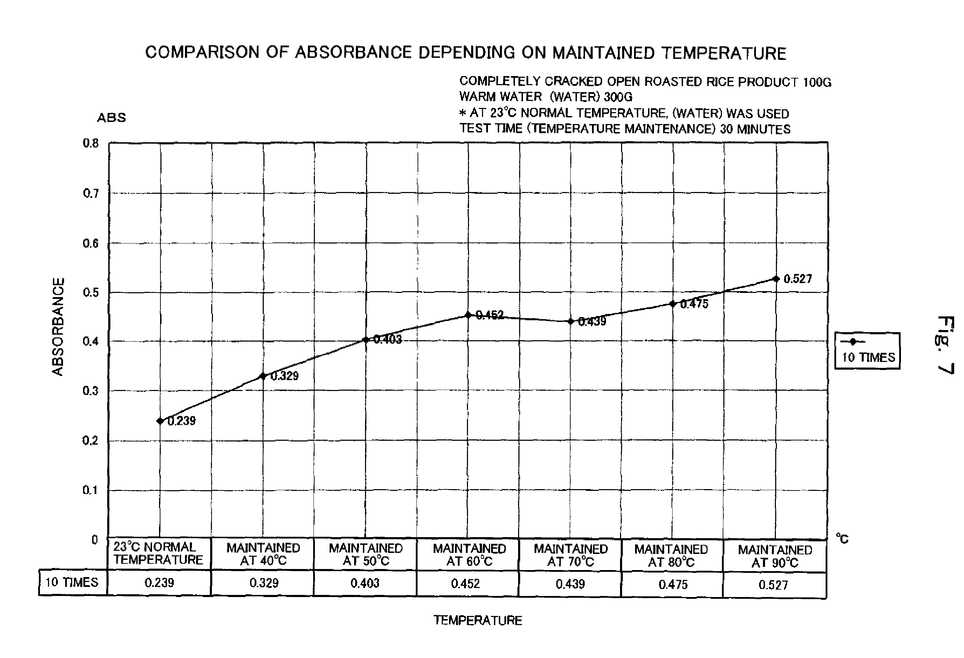

In the test results in Table 3, the concentration of each extract was assessed visually. In this case, the criteria tend to be unclear, and thus it is difficult to obtain objective results. Therefore, a test for confirming the concentration based on the absorbance was conducted. In this confirmation test, 100 g of the roasted rice 1 obtained by the impregnating step (S20) and being in the impregnated state and 300 g of water adjusted to a predetermined temperature were used. The mixture was stirred (rotor 260 rpm) for 30 minutes while maintaining the predetermined temperature using a stirrer equipped with a heat retaining function, and the absorbance of the obtained extract was measured. When measuring the absorbance, the extract was diluted 10-fold. Fig. 7 shows the test results.

The vertical axis in Fig. 7 indicates absorbance. The horizontal axis in Fig. 7 indicates samples, and samples for which the temperature was maintained low are arranged on the left side of the drawing and samples for which the temperature was maintained high are arranged on the right side of the drawing. Regarding the samples in this instance, an absorbance of 0.4 or more indicated that a sufficient visual concentration was obtained. That is to say, a concentration sufficient for a beverage was obtained. From this, it was found that an extract with a sufficient strength can be obtained by setting the extraction temperature to 50°C or more. This result was in accordance with the test results in Table 3.

### <Consideration of the Extraction Temperature>

There is also a method of performing extraction slowly for a long period of time as is the case with coffee made with cold water. When such a method is employed, the desired concentration may be obtained even with water at normal temperature (see third embodiment). Moreover, from the standpoint of flavor, it is sometimes preferred that the extraction temperature is low. This seems to be due to the elution temperature of the water-soluble savory (umami) ingredients.
Furthermore, it was found that the extraction temperature is preferably 80°C or less from the standpoint of flavor. Accordingly, taking both the extraction efficiency and the flavor into account, it was found that the extraction temperature is preferably 50°C or more and 80°C or less.

### <Recapitulation of the First Embodiment>

As described above, in the first embodiment, a roasted grain extract containing roasted components at high concentrations can be produced by performing the roasting step (S10), the impregnating step (S20), and the extracting step (S30).

### === Second Embodiment ===

In the first embodiment described above, it is necessary to transfer the roasted rice 1 that has been cracked open to another place during transition from the impregnating step (S20) to the extracting step (S30). At this time, the roasted rice 1 holds the impregnation liquid LQ1 (e.g., water) and thus is heavy. Moreover, when the rice holds the impregnation liquid LQ1, it may not be suitable for a long-term storage. These problems are significant in a case where a facility where the impregnating step is performed and a facility where the extracting step is performed are far away from each other.

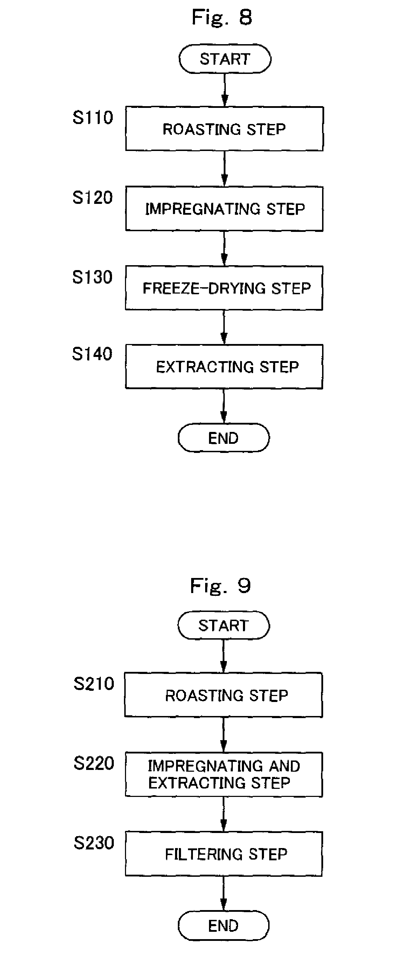

The second embodiment was arrived at in light of these issues, and it is a feature thereof to perform an impregnation liquid removing step of removing the impregnation liquid LQ1 held by the grain (roasted rice 1) that has been cracked open prior to the extracting step. Here, Fig. 8 is a flowchart illustrating the processing of the second embodiment. As shown in Fig. 8, a production process according to the second embodiment includes a roasting step (S110) of roasting a grain while the grain remains in a granular form, an impregnating step (S120) of impregnating the roasted grain with an impregnation liquid LQ1 so that an inside of the grain is swollen and the grain is cracked open, a freeze-drying step (S130) of removing the impregnation liquid LQ1 held by the grain that has been cracked open by freeze-drying, and an extracting step (S140) of bringing a solvent LQ2 into contact with the grain from which the impregnation liquid LQ1 has been removed, thereby extracting roasted components that are present in the inside of the grain. As the grain, rice 1 (unpolished rice) is used as in the first embodiment. Moreover, water at a predetermined temperature is used as the impregnation liquid LQ1 and the solvent LQ2.

The roasting step (S110) corresponds to the roasting step (S10) in the first embodiment, the impregnating step (S120) corresponds to the roasting step (S20) in the first embodiment, and the extracting step (S140) corresponds to the extracting step (S30) in the first embodiment. That is to say, the second embodiment is different in that the freeze-drying step (S130) is performed and that the roasted rice 1 from which moisture has been removed and water are mixed in the extracting step (S140). Therefore, in the following, the freeze-drying step (S130), which is a major difference, will be described and the description of the common features will be omitted.

### <Freeze-Drying Step (S130) >

The freeze-drying step, which is a kind of impregnation liquid removing step in which the impregnation liquid LQ1 held by the grain that has been cracked open in the impregnating step (S120) is removed, is a step of drying the grain while the grain is frozen.

In this freeze-drying step, moisture (the impregnation liquid LQ1) held by the roasted rice 1 (grain) is frozen. Then, the frozen roasted rice 1 is exposed to vacuum conditions at 4.6 mmHg (6.12 hPa) or less and heated. By doing this, ice crystals are changed into water vapor by sublimation and removed. In this case, it is possible to truly remove moisture alone. In this embodiment, the initial temperature is set to 65°C and the temperature at the end of the step is set to 45°C, and moisture is removed for 18 hours. Thus, a dried roasted rice block (not shown) was obtained. This roasted rice block is a kind of processed roasted rice product (processed roasted grain product) and is used as a raw material in the extracting step (S140).

By performing this freeze-drying step, the weight of the roasted rice block is reduced to about 1/3 of its original weight. Moreover, since moisture has been removed, the shelf life also is improved. As a result, the roasted rice 1 becomes easy to handle. For example, when the extracting step is performed at a remote place, the roasted rice can be transported with ease and also can be stored for a long time.

### <Extracting Step (5140)>

Next, the extracting step will be described. This extracting step is performed in the same manner as in the first embodiment. Thus, this step will be described briefly. In this extracting step, the roasted rice block (processed roasted grain product) obtained by the freeze-drying step is brought into contact with water serving as the solvent LQ2 to extract roasted components from the roasted rice block. That is to say, the roasted rice block and water serving as the solvent LQ2 are mixed, and water containing the roasted components is separated from the mixture of the roasted rice block and water using a filter fabric 32. By doing this, an extract (roasted grain extract) of the roasted rice 1 with a sufficient concentration can be obtained. Also in this extracting step (S140), care should be taken with regard to the temperature and the amount of water.

### <Recapitulation of the Second Embodiment>

As described above, in the second embodiment, the moisture removing step (freeze-drying step) is performed prior to the extracting step, so that handling of the grain that has been cracked open is easy.
It should be noted that, in addition to being used for the extracting step in food processing facilities, the processed grain product (roasted rice block) obtained by the freeze-drying step also may be divided into small amounts for home use. In this case, a roasted grain beverage can be extracted from this processed grain product at home. For example, it is possible to enjoy a roasted rice beverage conveniently by putting an appropriate amount of the roasted rice block in water adjusted to a predetermined temperature, followed by stirring, and filtering the resultant mixture using a coffee filter or a tea strainer. Moreover, the roasted rice block may be used as a raw material used for cooking, such as a flavoring ingredient in cakes. In addition, the residue that remains after extracting the roasted components also can be used as a raw material used for cooking, for example. This processed grain product is rich in fiber and thus useful as a health food.

### === Third Embodiment ===

In the embodiments described above, the step of cracking the roasted grain open (impregnating step S20, S120) and the step of extracting the roasted components (extracting step S30, S140) were performed separately. In this case, it was necessary to perform an operation such as a transfer of the roasted grain that has been cracked open. The third embodiment was arrived at focusing on this point, and extraction of the roasted components is performed while cracking the roasted grain open. That is to say, it is a feature thereof to perform an impregnating and extracting step of impregnating the roasted grain with a solvent LQ2 so that the inside of the grain is swollen and the grain is cracked open with this swelling, and bringing the solvent LQ2 into contact with the inside of the grain that has been cracked open, thereby extracting the roasted components that are present in the inside.

Here, Fig. 9 is a flowchart illustrating processing of the third embodiment. As shown in Fig. 9, a production process according to the third embodiment includes a roasting step (S210) of roasting a grain while the grain remains in a granular form, an impregnating and extracting step (S220) of extracting roasted components while cracking the roasted grain open, and a filtering step (S230) of separating water containing the roasted components from a mixture of the roasted grain and water. As the grain to be roasted, rice 1 (unpolished rice) is used.

Of these steps, the roasting step (S210) corresponds to the above-described embodiments (510, S110). Moreover, the filtering step (S230) is similar to processing performed in the extracting step (S30, S140) in the above-described embodiments. That is to say, the third embodiment is characterized in that the impregnating and extracting step (S220) is performed. Therefore, in the following, the impregnating and extracting step (S220) will be described and the description of the common features will be omitted.

### <Impregnating and Extracting Step (S220)>

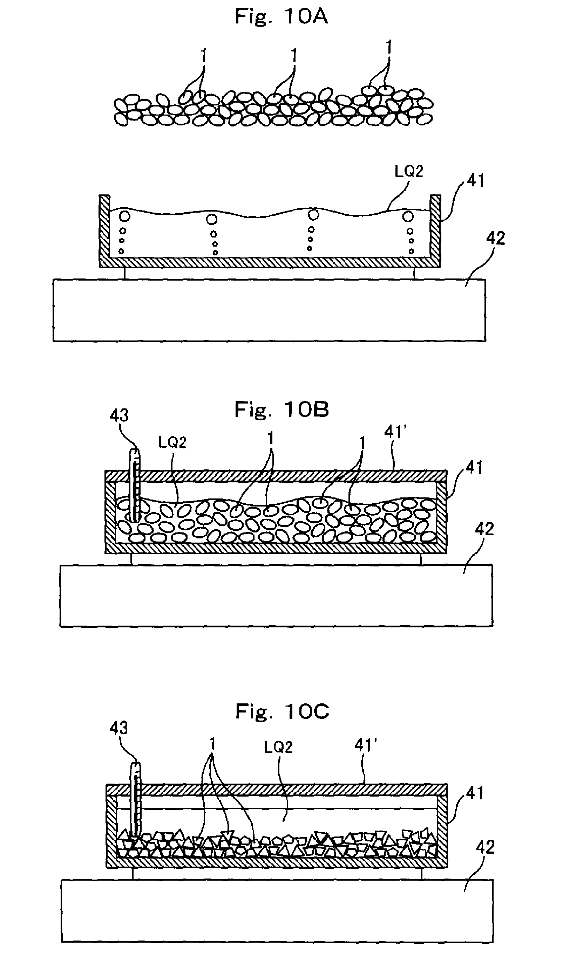

In the impregnating and extracting step, the grain that has been roasted in the roasting step (S210) is impregnated with the solvent LQ2 and cracked open, and roasted components contained in the grain that has been cracked open are extracted with the solvent LQ2. Here, Fig. 10A is a diagram schematically illustrating how a predetermined amount of the grain (roasted rice 1) is put in the solvent LQ2 adjusted to a predetermined temperature. Fig. 10B is a diagram schematically illustrating a state in which the temperature is maintained constant after putting the grain in the solvent LQ2. Fig. 10C is a diagram schematically illustrating a state in which the grain has been cracked open and the roasted components have been extracted into the solvent LQ2. Also in this embodiment, the grain to be roasted is rice 1 (unpolished rice) and the solvent LQ2 is water adjusted to a predetermined temperature.

In this impregnating and extracting step, first, as shown in Fig. 10A, a vessel 41 having good heat retention properties, such as an earthenware pot, is placed on a heater 42, and the solvent LQ2 (water) is poured into this vessel 41 and adjusted to a predetermined temperature. When the solvent LQ2 in the vessel 41 reaches the predetermined temperature, a predetermined amount of the roasted rice 1 (grain) is put in the vessel 41 and stirred entirely, as shown in Fig. 10B. Thereafter, the vessel is covered with a lid 41', and this temperature state is maintained until the roasted rice 1 is cracked open and the roasted components are extracted into the solvent LQ2 as shown in Fig. 10C. At this time, the heater 42 is controlled appropriately based on measurement results of a thermometer 43.

In this impregnating and extracting step, it is important that the roasted rice 1 be cracked open. The reason for this is that the carbonized coating 1a has been formed on the surface of the roasted rice 1 and that the roasted components that are present in the inside 1b of the rice have been formed after gelatinization of starch. This means that if the roasted rice 1 is not cracked open, then only the roasted components adhered to the carbonized coating 1a are extracted into the solvent LQ2. That is to say, the savory (umami) ingredients generated by gelatinization of starch are trapped in the inside 1b of the rice. As a result, water serving as the solvent LQ2 lacks savoriness (umami) even when it is colored. Therefore, this impregnating and extracting step is required to be performed until the roasted rice 1 is in a state in which it is cracked open and the roasted components in the inside 1b of the rice are sufficiently extracted into the solvent LQ2. Here, Table 4 shows the results of a test conducted for various temperatures of the solvent LQ2 (water).

**Table 4**

| sample | temp. of water (°C) | roasted rice (g) | amount of water (g) | extraction time | conc. | comment |
|---|---|---|---|---|---|---|
| 3-1 | 95 to 98 | 400 | 1000 | 2 hrs 30 min | OK | not cracked open at all |
| 3-2 | 89 to 91 | 400 | 1000 | 2 hrs 30 min | OK | 10% cracked open |
| 3-3 | 83 to 85 | 400 | 1000 | 2 hrs 30 min | OK | 50% cracked open |
| 3-4 | 69 to 71 | 400 | 1000 | 2 hrs 30 min | OK | 80% cracked open |
| 3-5 | 59 to 61 | 400 | 1000 | 2 hrs 30 min | OK | 60% cracked open |
| 3-6 | 49 to 51 | 400 | 1000 | 2 hrs 30 min | OK | 30% cracked open |
| 3-7 | 40 to 42 | 400 | 1000 | 2 hrs 30 min | OK | 20% cracked open |
| 3-8 | 20 to 23 | 200 | 970 | 24 hrs | OK | too much time was needed |

From these test results, the following was found. When the temperature of water was set to 95°C or more (sample 3-1), the roasted rice 1 was not cracked open at all although the water after extraction (an extract) was colored. Therefore, the obtained extract had an intensely bitter and flavorless taste. Moreover, the extract also was highly cloudy. When the temperature of water was set to about 90°C (sample 3-2), a small amount of the roasted rice 1 (approximately 10%) could be confirmed to have been cracked open. However, the obtained extract was intensely bitter and also had an odd taste. Also in this case, cloudiness was noticeable.

When the temperature of water was set to about 85°C (sample 3-3), almost half (approximately 50%) of the roasted rice 1 was cracked open, and the cloudiness of the obtained extract was small even though the extract seemed to be a little lighter than that of sample 3-2. Moreover, the extract had bitterness and savoriness (umami) due to roasting. When the temperature of the water was set to about 70°C (sample 3-4), most (approximately 80%) of the roasted rice 1 was cracked open. The obtained extract was somewhat thick. Moreover, the extract had a rich taste and was intensely bitter. However, the bitterness was not unpleasant. In addition, the flavor seemed to have remained and the extract had savoriness (umami) . When the temperature of the water was set to about 60°C (sample 3-5), slightly more than half (approximately 60%) of the roasted rice 1 was cracked open, and the obtained extract was similar to that of sample 3-4. When the temperature of water was set to about 50°C (sample 3-6), approximately 30% of the roasted rice 1 was cracked open. The obtained extract did not have thickness, and its taste was weaker than that of the samples described above. Moreover, the extract was bitter. However, the bitterness was not unpleasant. In addition, the flavor seemed to have remained and the extract had savoriness (umami). When the temperature of water was set to about 40°C (sample 3-7), approximately 20% of the roasted rice 1 was cracked open. The obtained extract did not have thickness, and its taste was weaker than that of the sample 3-6 described above and was a little bitter. The strength of the extract was such that the extract tasted good when drunk as it was. Therefore, when the extraction time is limited to 2 hours and 30 minutes, it seems that the temperature of water that is necessary to obtain a concentration suitable for beverages is at least 40°C.

Furthermore, when extraction was performed at normal temperature (sample 3-8), almost all of the roasted rice 1 was cracked open after 4 hours. Then, the mixture was left for almost one day and thereafter filtered, and the cloudiness of the obtained extract was small though the color of the extract was lighter than that obtained by extraction at 85°C. Although the concentration of the extract was such that the extract could be drunk as a roasted rice beverage as it was, the extract gave a good flavor. This seems to be because the savory (umami) ingredients were extracted in a balanced manner by using water at normal temperature.

### <Recapitulation of the Third Embodiment>

As described above, in the third embodiment, the roasted components are extracted while cracking the roasted grain open in the impregnating and extracting step (S220), so that an operation such as a transfer of the grain that has been cracked open can be omitted, and the work efficiency can be improved. Moreover, from the standpoint of obtaining an extract with a concentration suitable for beverages in an extraction time suitable for mass production (e.g., within 2 hours and 30 minutes), the temperature of the solvent LQ2 can be set to a range from 40°C to 85°C. By setting the temperature to this range, extraction can be performed in a time suitable for mass production without loss of the savory (umami) ingredients in the roasted components. Furthermore, from the stand point of extracting the roasted components in concentrations suitable for beverages, the temperature of the solvent LQ2 can be set to a range from 20°C to 85°C.

### === Other Embodiments ===

In the description of the foregoing embodiments, the methods for producing extracts from roasted grain were mainly discussed, and the description also includes the disclosure of methods for producing processed roasted grain products and methods for producing extracts from these processed roasted grain products. Moreover, the foregoing embodiments are for the purpose of elucidating the present invention and are not to be interpreted as limiting the present invention. The present invention can of course be altered and improved without departing from the gist thereof and includes functional equivalents . In particular, the present invention also includes embodiments that will be described below.

### <Regarding the Grain to be Roasted>

In the embodiments described above, rice 1 (unpolished rice) were used as the grain, and roasted rice was obtained by roasting this rice. However, the grain to be roasted is not limited to the rice 1. For example, wheat may be used. Table 5 shows a specific example of the roasting conditions of wheat.

**Table 5**

| step | elapsed time (min) | roasting pot temperature (°C) |
|---|---|---|
| 1 | 15 | 75 |
| 2 | 60 | 190 |
| 3 | 110 | 204 |
| 4 | 120 | 210 |

When roasting was performed under the roasting conditions shown above, wheat (hereinafter sometimes referred to as "roasted wheat") the inside of which was entirely charred was obtained. Then, when this roasted wheat was impregnated with water, the roasted wheat could be cracked open as in the case of the roasted rice 1 although it took time. Furthermore, by performing an extracting step as described above, an extract of the roasted wheat could be obtained. The obtained extract had a concentration equivalent to that of the extracts of the roasted rice 1. Moreover, the cloudiness of the extract was less than that of the extracts of the roasted rice 1. From the foregoing, it could be confirmed that an extract can be obtained also from roasted wheat. Since a roasted extract could be obtained from wheat, it is believed that a roasted extract can be obtained also from barley. That is to say, an extract can be obtained from roasted barley or wheat. Moreover, since roasted extracts could be obtained from the rice 1 and wheat, it is believed that roasted extracts can be obtained also from other grains by setting the roasting conditions and the like appropriately.

### <Regarding the Impregnation Liquid and the Extract>

In the embodiments described above, water was used as both of the impregnation liquid LQ2 with which the roasted rice 1 was impregnated in the impregnating step (S20, S120) and the solvent LQ2 used in the extracting step (S30, S140) or the impregnating and extracting step (S220). When water is used as described above, handling in each step becomes easy, and also the resultant extract is easy to handle. However, the impregnation liquid LQ1 and the solvent LQ2 are not limited to water. For example, the impregnation liquid LQ1 and the solvent LQ2 may be a mixture of water and an alcohol. In particular, the solvent LQ2 may be a pure alcohol. In such cases, an alcoholic beverage of roasted grain can be produced. Here, it is believed that alcohols have higher abilities to extract roasted components than water, and thus it seems that an extract with a high concentration can be obtained at a temperature lower than when water is used. For example, it seems that an extract with a sufficiently high concentration can be obtained when the temperature is in a range from normal temperature to around 50°C.

### <Regarding the Impregnation Liquid Removing Step>

In the second embodiment described above, the freeze-drying step was performed as the impregnation liquid removing step. However, in this impregnation liquid removing step, other drying methods may be used, as long as the impregnation liquid held by the grain can be removed. For example, warm air drying may be used. It should be noted that performing a freeze-drying step as in the second embodiment has the advantage that only the impregnation liquid can be removed without loss of roasted components.

### <Regarding the Roasting Step>

In the embodiments described above, by performing roasting with the roasting apparatus 10, the carbonized coating 1a was formed on the surface of the grain in advance, and then the inside 1b of the rice, i.e., the grain, was carbonized. The importance of performing roasting through such stages is as mentioned previously, and it seems that there is more than one roasting condition to achieve this. For example, by suitably adjusting the temperature and setting the stirring conditions and the like, a similar roasted grain can be obtained even when the roasting procedures are carried out manually using a frying pan. On the contrary, if the temperature in the roasting pot 12, the rotating speed of the roasting pot 12, the roasting time, and the like are set unsuitably, then roasting may not be performed successfully even when the above-described roasting apparatus 10 is used. Therefore, at the time of roasting, it is necessary to pay attention to the roasting conditions.

## Claims

1. A method for producing a roasted grain extract, comprising:
a roasting step of roasting a grain while the grain remains in a granular form;
an impregnating step of impregnating the roasted grain with an impregnation liquid so that an inside of the grain is swollen and the grain is cracked open; and
an extracting step of extracting a roasted component that is present in the inside of the grain by bringing a solvent into contact with the inside of the grain that has been cracked open.

2. A method for producing a roasted grain extract according to claim 1,
wherein in the roasting step, the grain is heated in a state in which the entire inside of the grain has absorbed moisture and a carbonized coating is formed on a surface of the grain, after which the inside of the grain is carbonized.

3. A method for producing a roasted grain extract according to claim 1,
wherein in the impregnating step, the roasted grain is soaked in an amount of the impregnation liquid that is equivalent to a maximum amount that the roasted grain can be impregnated with.

4. A method for producing a roasted grain extract according to claim 1,
wherein in the extracting step, the grain that has been cracked open and the solvent are put in a same vessel and mixed, and after the roasted component is extracted into the solvent, the solvent containing the roasted component is separated from a mixture.

5. A method for producing a roasted grain extract according to claim 1,
wherein an impregnation liquid removing step of removing the impregnation liquid held by the grain that has been cracked open is performed prior to the extracting step.

6. A method for producing a roasted grain extract according to claim 5,
wherein in the impregnation liquid removing step, the impregnation liquid held by the grain is removed while the impregnation liquid is frozen.

7. A method for producing a roasted grain extract according to claim 5,
wherein in the extracting step, the grain from which the impregnation liquid has been removed and the solvent are put in the same vessel and mixed, and after the roasted component is extracted into the solvent, the solvent containing the roasted component is separated from the mixture.

8. A method for producing a roasted grain extract according to claim 1,
wherein in the extracting step, water is used as the solvent.

9. A method for producing a roasted grain extract according to claim 8,
wherein in the extracting step, water adjusted to a temperature of 50°C or more and 80°C or less is used as the solvent.

10. A method for producing a roasted grain extract according to claim 1,
wherein in the extracting step, a mixture of water and an alcohol is used as the solvent.

11. A method for producing a roasted grain extract according to claim 1,
wherein in the extracting step, an alcohol is used as the solvent.

12. A method for producing a roasted grain extract, comprising:
a roasting step of roasting a grain while the grain remains in a granular form; and
an impregnating and extracting step of impregnating the roasted grain with a solvent so that an inside of the grain is swollen and the grain is cracked open with this swelling, and extracting a roasted component that is present in the inside of the grain by bringing the solvent into contact with the inside of the grain that has been cracked open.

13. A method for producing a roasted grain extract according to claim 12,
wherein in the impregnating and extracting step, water is used as the solvent.

14. A method for producing a roasted grain extract according to claim 13,
wherein in the impregnating and extracting step, water adjusted to a temperature of 20°C or more and 85°C or less is used as the solvent.

15. A method for producing a roasted grain extract according to claim 13,
wherein in the impregnating and extracting step, water adjusted to a temperature of 40°C or more and 85°C or less is used as the solvent.

16. A method for producing a roasted grain extract according to claim 12,
wherein in the impregnating and extracting step, a mixture of water and an alcohol is used as the solvent.

17. A method for producing a roasted grain extract according to claim 12,
wherein in the impregnating and extracting step, an alcohol is used as the solvent.

18. A method for producing a roasted grain extract according to claim 1,
wherein in the roasting step, unpolished rice is used as the grain.

19. A method for producing a roasted grain extract according to claim 1,
wherein in the roasting step, either one of barley and wheat is used as the grain.

20. A method for producing a roasted grain extract by bringing a solvent into contact with a processed roasted grain product and extracting a roasted component from the processed roasted grain product,
wherein the processed roasted grain product is produced through:
a roasting step of roasting a grain while the grain remains in a granular form;
an impregnating step of impregnating the roasted grain with an impregnation liquid so that an inside of the grain is swollen and the grain is cracked open; and
an impregnation liquid removing step of removing the impregnation liquid held by the grain that has been cracked open.

21. A method for producing a processed roasted grain product, comprising:
a roasting step of roasting a grain while the grain remains in a granular form;
an impregnating step of impregnating the roasted grain with an impregnation liquid so that an inside of the grain is swollen and the grain is cracked open; and
an impregnation liquid removing step of removing the impregnation liquid held by the grain that has been cracked open.
